(19) Europäisches Patentamt
European Patent Office
Office européen des brevets

(11) EP 3 290 455 B1

(12) EUROPEAN PATENT SPECIFICATION

(45) Date of publication and mention of the grant of the patent:
**29.01.2020 Bulletin 2020/05**

(21) Application number: **16786571.6**

(22) Date of filing: **28.04.2016**

(51) Int Cl.:
***C08G 59/40*** (2006.01) ***C08K 3/28*** (2006.01)
***C08L 63/00*** (2006.01) ***C08K 3/22*** (2006.01)
***C08G 59/50*** (2006.01) ***C08G 59/62*** (2006.01)
***C08J 5/24*** (2006.01) ***C08G 65/00*** (2006.01)

(86) International application number:
**PCT/JP2016/063397**

(87) International publication number:
**WO 2016/175295 (03.11.2016 Gazette 2016/44)**

# (54) RESIN COMPOSITION, RESIN SHEET, RESIN CURED PRODUCT AND RESIN SUBSTRATE

HARZZUSAMMENSETZUNG, HARZFOLIE, GEHÄRTETES HARZPRODUKT UND HARZSUBSTRAT

COMPOSITION DE RÉSINE, FEUILLE DE RÉSINE, PRODUIT DE RÉSINE DURCI ET SUBSTRAT DE RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2015 JP 2015091605**
**25.04.2016 JP 2016086709**

(43) Date of publication of application:
**07.03.2018 Bulletin 2018/10**

(73) Proprietor: **TDK Corporation**
**Tokyo 108-0023 (JP)**

(72) Inventors:
- **KUWAJIMA, Takayoshi**
**Tokyo 108-0023 (JP)**
- **SUGIYAMA, Tsuyoshi**
**Tokyo 108-0023 (JP)**

(74) Representative: **Epping - Hermann - Fischer Patentanwaltsgesellschaft mbH**
**Schloßschmidstraße 5**
**80639 München (DE)**

(56) References cited:
**WO-A1-93/14140**
**WO-A1-2010/098066**
**JP-A- 2015 086 278**
**JP-A- 2015 232 116**
**US-A1- 2006 258 824**
**US-A1- 2014 087 614**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The invention relates to a resin composition including an epoxy compound, and to a resin sheet, a resin cured product, and a resin substrate in each of which the resin composition is used.

### Background Art

There has been a trend toward wide use of various electronic components for high-temperature environment applications such as automobiles. Research and development have been performed actively on thermal characteristics of a resin substrate used for the electronic components, accordingly.

In a manufacturing process of the resin substrate, a resin composition is shaped into a sheet shape, following which the sheet-shaped resin composition (a resin sheet) is subjected to a curing reaction. This results in manufacturing of the resin substrate that includes a cured reactant (a resin cured product) of the resin composition.

Various proposals have been already made on, for example, a composition of the resin composition. Specifically, an inorganic particle such as an aluminum oxide and a magnesium oxide is contained in a resin composition in order to increase a heat-conducting property. In this case, a bromine-containing epoxy compound is used to suppress ignition and burning characteristics (for example, see Patent Literature 1).

### Citation List

### Patent Literature

Patent Literature 1: Japanese Patent Registration No. 5423783 specification

### Summary of Invention

There is, however, room for improvement in that a sufficient thermal characteristic has still not been obtained for a resin substrate.

What is therefore desired is to provide a resin composition, a resin sheet, a resin cured product, and a resin substrate that are able to achieve a superior thermal characteristic.

A resin composition according to one embodiment of the invention includes an epoxy compound, a triphenylbenzene compound expressed by the following expression (1), an inorganic particle including one or both of a magnesium oxide (MgO) and an aluminum nitride (AlN), and phosphorus (P), and a content (mass%) of the phosphorus expressed by the following mathematical expression (A) is from 0.5 mass% to 4.3 mass%.

$$\text{The content (mass\%) of the phosphorus} = (\text{mass of the phosphorus} / \text{mass of nonvolatile content excluding the inorganic particle}) \times 100 \quad \ldots (A)$$

[Chemical Formula 1]

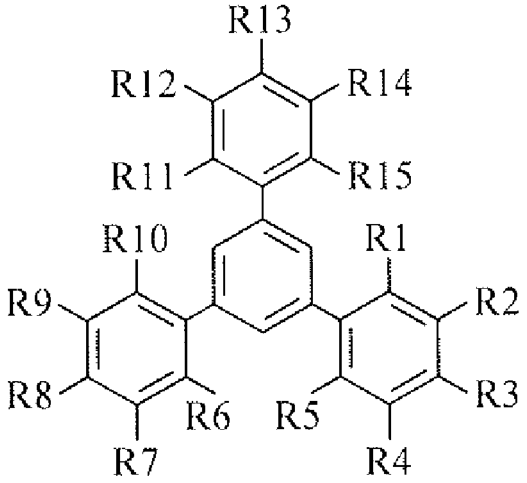

...(1)

(R1 to R15 are each any of a hydrogen group (-H) and a reactive group, and the reactive group is any of a hydroxyl group (-OH) and an amino group ($-NH_2$), where at least one of R1 to R15 is the reactive group.)

A resin sheet according to one embodiment of the invention includes the resin composition according to one embodiment of the invention described above.

A resin cured product according to one embodiment of the invention includes a cured reactant of the resin composition according to one embodiment of the invention described above.

A resin substrate according to one embodiment of the invention includes the cured reactant of the resin sheet according to one embodiment of the invention described above.

Here, the wording "mass of nonvolatile content excluding the inorganic particle" used to calculate the content of the phosphorus refers to mass of a remaining nonvolatile component, excluding the inorganic particle, of all of nonvolatile components included in the resin composition. Hence, the wording "content (mass%) of the phosphorus" refers to a ratio (percentage) of the mass of the phosphorus to the mass of the remaining nonvolatile component excluding the inorganic particle described above.

Note that the phosphorus may be present at any part within the resin composition. In other words, the phosphorus may be included in the epoxy compound as a constituent element, or may be included, as the constituent element, in any kind or two or more kinds of other materials to be described later. The term "other materials" refers to any component that may possibly be included in the resin composition together with the epoxy compound, the triphenylbenzene compound, and the inorganic particle that are described above.

The resin composition according to one embodiment of the invention includes the epoxy compound, the triphenylbenzene compound expressed by the expression (1), the inorganic particle (including one or both of the magnesium oxide and the aluminum nitride.), and the phosphorus, and the content of the phosphorus is from 0.5 mass% to 4.3 mass%. Hence, it is possible to achieve a superior thermal characteristic. It is also possible for the resin sheet, the resin cured product, and the resin substrate, each according to one embodiment of the invention, to achieve a similar effect.

**Brief Description of Drawings**

[FIG. 1] FIG. 1 is a cross-sectional view of a configuration of a resin sheet in which a resin composition according to the invention is used.

[FIG. 2] FIG. 2 is a cross-sectional view of another configuration of the resin sheet in which the resin composition according to the invention is used.

[FIG. 3] FIG. 3 is a cross-sectional view of yet another configuration of the resin sheet in which the resin composition according to the invention is used.

[FIG. 4] FIG. 4 is a cross-sectional view of a configuration of a resin substrate in which a resin cured product according to the invention is used.

[FIG. 5] FIG. 5 is a cross-sectional view of another configuration of the resin substrate in which the resin cured product according to the invention is used.

[FIG. 6] FIG. 6 is a cross-sectional view of yet another configuration of the resin substrate in which the resin cured

product according to the invention is used.
[FIG. 7] FIG. 7 is a cross-sectional view of yet another configuration of the resin substrate in which the resin cured product according to the invention is used.
[FIG. 8] FIG. 8 is an explanatory cross-sectional view of a method of manufacturing the resin substrate illustrated in FIG. 7.

## Description of Embodiments

In the following, one embodiment of the invention is described in detail with reference to the drawings. Note that the order of description is as follows.

1. Resin Composition
   - 1-1. Configuration
   - 1-2. Manufacturing Method
   - 1-3. Action and Effect
   - 1-4. Detailed Reason
2. Resin Sheet
   - 2-1. Configuration
   - 2-2. Manufacturing Method
   - 2-3. Action and Effect
3. Resin Cured Product
   - 3-1. Configuration
   - 3-2. Manufacturing Method
   - 3-3. Action and Effect
4. Resin Substrate
   - 4-1. Configuration
   - 4-2. Manufacturing Method
   - 4-3. Action and Effect

One embodiment of the invention to be described in the following is an illustrative example for purpose of describing the invention. The invention is therefore not limited only to one embodiment to be described herein. It is possible to alter one embodiment of the invention to any of various embodiments so long as they remain within the scope of the invention.

<1. Resin Composition>

First, a description is given of a resin composition according to one embodiment of the invention.
The resin composition is used for manufacturing of, for example, a resin sheet, a resin cured product, and a resin substrate to be described later. The use of the resin composition, however, may be any other use.

<1-1. Configuration>

The resin composition includes an epoxy compound, a triphenylbenzene compound expressed by the following expression (1), an inorganic particle, and phosphorus. The inorganic particle includes one or both of a magnesium oxide and an aluminum nitride.

[Chemical Formula 2]

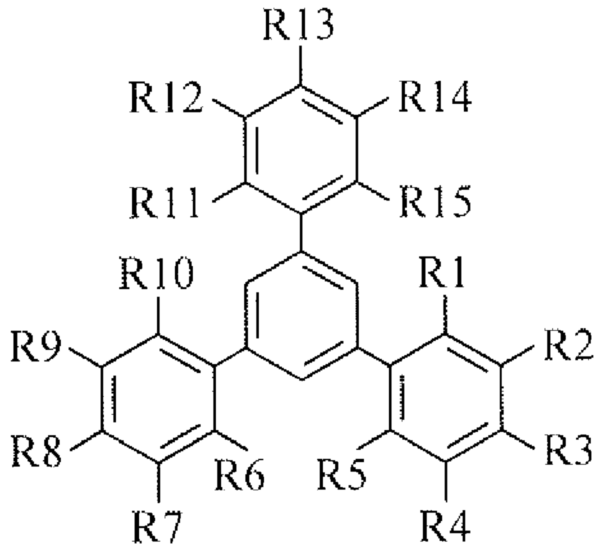

...(1)

(R1 to R15 are each any of a hydrogen group and a reactive group, and the reactive group is any of a hydroxyl group and an amino group, where at least one of R1 to R15 is the reactive group.)

The resin composition to be described here is used to manufacture an intermediate product such as the resin sheet and to manufacture a final product (resin cured product) such as the resin substrate. The term "intermediate product" refers to a material that is in a state in which a curing reaction (a cross-linking reaction) of the resin composition has not substantially been completed as described later. In addition, the term "final product" refers to a material that is in a state in which the curing reaction of the resin composition has substantially been completed as described later.

The epoxy compound, which is a thermosetting resin, is a so-called main agent. On the other hand, the triphenylbenzene compound, to be used together with the epoxy compound and including a reactive group, is a so-called curing agent. The curing agent is used to progress the cross-linking reaction of the epoxy compound with use of the reactive group. The inorganic particle is a heat-conducting material that increases a heat-conducting property of the resin composition. The phosphorus is a flame retardant that increases flame retardancy of the resin composition.

In the following, the epoxy compound as the main agent and the triphenylbenzene compound as the curing agent are also collectively referred to as simply a "resin component". However, when the resin composition includes any kind or two or more kinds of polymer compounds as later-described other materials, the "resin component" encompasses such polymer compounds as well.

A reason why the resin composition includes the triphenylbenzene compound, the inorganic particle, and the phosphorus together with the epoxy compound is that the flame retardancy and tracking resistance both increase while maintaining a high heat-conducting property of, for example, the resin cured product. A detailed reason as to why such advantages are obtained is described later.

Note, however, that a content (mass%) of the phosphorus expressed by the following mathematical expression (A) is from 0.5 mass% to 4.3 mass%.

$$\text{The content (mass\%) of the phosphorus} = (\text{mass of the phosphorus} / \text{mass of nonvolatile content excluding the inorganic particle}) \times 100 \quad \ldots \text{(A)}$$

As described above, the wording "mass of nonvolatile content excluding the inorganic particle" refers to mass of a remaining nonvolatile component, excluding the inorganic particle, of all of nonvolatile components included in the resin composition. Accordingly, the wording "content (mass%) of the phosphorus" refers to a ratio (percentage) of the mass of the phosphorus to the mass of the remaining nonvolatile component excluding the inorganic particle.

A reason why the content of the phosphorus is within an above-described range is that the content of the phosphorus, as the flame retardant, is made appropriate in a system that includes the epoxy compound and the triphenylbenzene compound both serving as the resin component and the inorganic particle serving as the heat-conducting material. Thus, the high heat-conducting property is obtained and both the flame retardancy and the tracking resistance increase in the resin cured product.

The term "tracking resistance" refers to resistance to a tracking phenomenon. The tracking phenomenon is a phenomenon in which, in a state where a surface of an organic insulator (a resin cured product) is contaminated by moisture, an electrolyte, dust, and so forth, a carbide (a combusted product and a decomposed product) is formed on the surface of the resin cured product due to generation of heat on the surface of the resin cured product resulting from occurrence of a minute voltage (scintillation) upon application of a voltage on the resin cured product. This unintentionally results in formation of a conduction path on the surface of the resin cured product.

More specifically, if the content of the phosphorus is less than 0.5 mass%, the phosphorus that functions as the flame retardant becomes too small in number, making it easier for the resin cured product to burn easily.

If the content of the phosphorus is greater than 4.3 mass%, a rate of the phosphorus that occupies in the resin composition becomes too large, making it difficult for the resin cured product to burn but, on the other hand, decreasing thermal conductivity of the resin cured product. In addition thereto, a starting temperature of thermal decomposition of the resin cured product decreases as a result of a decrease in a cross-linking density, making it easier for the resin cured product to cause the tracking phenomenon.

In contrast, when the content of the phosphorus is from 0.5 mass% to 4.3 mass%, the resin cured product becomes difficult to burn and high thermal conductivity is obtained for the resin cured product. Further, this prevents the decrease in the cross-linking density, making it difficult for the resin cured product to cause the tracking phenomenon. Hence, the high heat-conducting property is obtained, and both the flame retardancy and the tracking resistance increase.

In particular, it is preferable that the content of the phosphorus be from 0.8 mass% to 4 mass%. A reason for this is that the content of the phosphorus is made more appropriate and higher effect is obtained accordingly.

Further, it is more preferable that the content of the phosphorus be from 0.8 mass% to 2 mass%. A reason for this is that, in particular, the tracking resistance increases significantly owing to the content of the phosphorus which is made even more appropriate, and even higher effect is obtained accordingly.

It is to be noted that a procedure for determining the content of the phosphorus is as follows, for example. A description is given here of a case where a solid resin composition to be described later is used.

First, a resin composition is dried in an oven (temperature = 100°C and time = 2 hours). Thereafter, mass A of the resin composition after the drying is measured. Thereafter, the resin composition is fed into a crucible, following which the resin composition is heated using an electric furnace (temperature = 700°C and time = 4 hours). This removes nonvolatile content (mainly the resin component) other than the inorganic particle, and thus mass B of the inorganic particle is measured. Thereafter, the mass B is subtracted from the mass A to calculate mass C of the remaining nonvolatile content excluding the inorganic particle. Thereafter, a resin composition having the same mass as the mass A is likewise dried (temperature = 100°C and time = 2 hours), following which an analysis of the resin composition is performed using inductively coupled plasma emission spectroscopy (ICP spectrometry) to measure mass D of the phosphorus included in the resin composition. Lastly, on the basis of the mass C and the mass D, the content (mass%) of the phosphorus is calculated using the foregoing mathematical expression (A).

The resin composition may be in a solid state such as a powder state and a massive state, may be in a liquid state, or may be in a state in which both of them are mixed. A state of the resin composition is determined as appropriate depending on use, for example.

Note that a rate of mixture between the epoxy compound and the triphenylbenzene compound is not particularly limited. In general, however, a single epoxy group and a single active hydrogen in a reactive group react with each other in a case where the epoxy compound including an epoxy group and the triphenylbenzene compound including the reactive group are subjected to the cross-linking reaction. Hence, in order to increase an efficiency of reaction of the epoxy compound with the triphenylbenzene compound, it is preferable that the rate of mixture be set such that the total number of epoxy groups contained in the epoxy compound and the total number of active hydrogen contained in the triphenylbenzene compound becomes 1:1.

[Epoxy Compound]

The epoxy compound as the main agent is any kind or two or more kinds of compounds containing one or more epoxy groups ($-C_3H_5O$) in a single molecule. In particular, it is preferable that the epoxy compound contain two or more epoxy groups in a single molecule. A reason for this is that this makes it easier for the epoxy compound and the triphenylbenzene compound to react with each other.

Examples of the epoxy compound include a glycidyl ether type epoxy compound, a glycidyl ester type epoxy compound, a glycidyl amine type epoxy compound, a novolac type epoxy compound, a cycloaliphatic type epoxy compound, and a long-chain aliphatic type epoxy compound, although the epoxy compound is not particularly limited in kind.

Examples of the glycidyl ether type epoxy compound include a bisphenol A type epoxy compound and a bisphenol F type epoxy compound. Examples of the novolac type epoxy compound include a cresol novolac type epoxy compound and a phenol novolac type epoxy compound. Beside these, examples of the kind of the epoxy compound may include a fire-retardant epoxy compound, a hydantoin-based epoxy compound, and an isocyanurate-based epoxy

compound.

Note that specific examples of the glycidyl ether type epoxy compound are not particularly limited as long as a compound includes a glycidyl ether type structure (group). A fact that no limitation is made to the kind as long as a particular structure is included as described above also applies similarly to specific examples of other epoxy compounds such as the glycidyl ester type epoxy compound.

In particular, it is preferable that the epoxy compound contain a mesogenic skeleton in a single molecule. A reason for this is as follows.

Firstly, this makes it easier for benzene rings to be overlapped with each other between molecules of the epoxy compound and thereby makes a distance between the benzene rings small. Hence, a density of the epoxy compound increases in the resin composition. Further, lattice vibration of a molecule becomes difficult to scatter in the resin cured product and high thermal conductivity is achieved accordingly.

In particular, the above-described scattering phenomenon of the lattice vibration of the molecule constitutes a major cause of a decrease in thermal conductivity. Hence, the decrease in the thermal conductivity is suppressed significantly by suppressing the scattering phenomenon of the lattice vibration of the molecule.

Secondly, this makes it easier for a benzene ring included in the mesogenic skeleton of the epoxy compound and a benzene ring included in a skeleton (1, 3, 5-triphenylbenzene) of the triphenylbenzene compound to be overlapped with each other in the epoxy compound and the triphenylbenzene compound. Hence, high thermal conductivity is achieved owing to a reason similar to that of a case where the benzene rings become overlapped with each other easily between the molecules of the epoxy compound as described above.

The term "mesogenic skeleton" is a generic term for a group of atoms including two or more aromatic rings and having rigidity and orientation. Specifically, the mesogenic skeleton is, for example, a skeleton including two or more benzene rings and in which the benzene rings are bonded to each other through either a single bond or a non-single bond.

Note that a direction of bond in a case where three or more benzene rings are bonded is not particularly limited. In other words, three or more benzene rings may be bonded linearly, may be so bonded as to be bent once or more times along the way, or may be so bonded as to be branched in two or more directions.

The term "non-single bond" is a generic term for a divalent group including one or two or more constituent elements and including one or two or more multiple bonds. Specifically, the non-single bond includes any kind or two or more kinds of constituent elements such as carbon (C), nitrogen (N), oxygen (O), and hydrogen (H). Further, the non-single bond includes one or both of double bond and triple bond as the multiple bond.

The mesogenic skeleton may include only the single bond, only the non-single bond, or both of the single bond and the non-single bond, as the kind of bond between the benzene rings. Further, there may be only one kind or two or more kinds for the kind of the non-single bond.

Specific examples of the non-single bond include those represented by the respective expressions (2-1) to (2-10) as listed below. Note that an arrow illustrated in each of the expressions (2-6) and (2-10) denotes a coordinate bond.

[Chemical Formula 3]

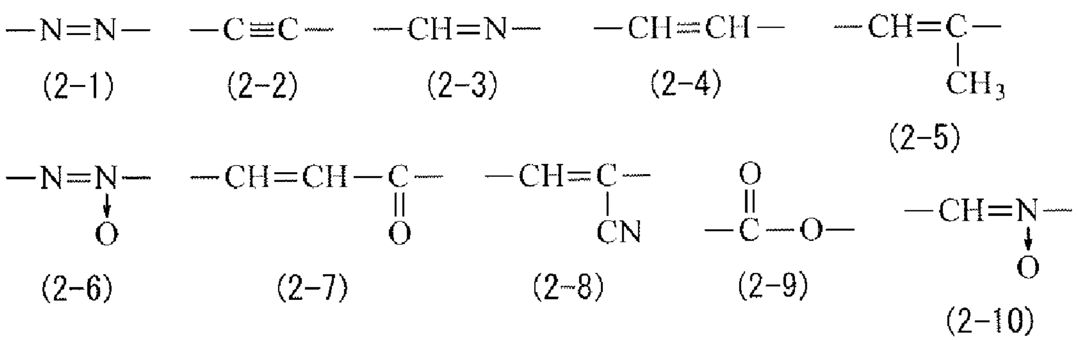

(2-1) (2-2) (2-3) (2-4) (2-5) (2-6) (2-7) (2-8) (2-9) (2-10)

Specific examples of the mesogenic skeleton include biphenyl and terphenyl. Note that terphenyl may be o-terphenyl, m-terphenyl, or p-terphenyl.

Note that the epoxy compound may include, as a constituent element, the phosphorus in a single molecule as described later, for example. The epoxy compound including the phosphorus as the constituent element is a so-called a phosphorus-containing epoxy compound.

[Triphenylbenzene Compound]

The triphenylbenzene compound as the curing agent is any kind or two or more kinds of compounds including the skeleton (1, 3, 5-triphenylbenzene) and the reactive group. In other words, the triphenylbenzene compound includes 1, 3, 5-triphenylbenzene in a single molecule as the skeleton, and includes the reactive group introduced in the skeleton.

The skeleton (1,3, 5-triphenylbenzene) includes a single benzene ring (a center benzene ring) located at the center and three benzene rings (peripheral benzene rings) located around the center benzene ring.

In the following, the peripheral benzene ring in which R1 to R5 are introduced is referred to as a "first peripheral benzene ring", the peripheral benzene ring in which R6 to R10 are introduced is referred to as a "second peripheral benzene ring", and the peripheral benzene ring in which R11 to R15 are introduced is referred to as a "third peripheral benzene ring".

R1 to R15 are each not particularly limited in kind as long as they are each any of the hydrogen group and the reactive group. In other words, R1 to R15 each may be the hydrogen group or may be the reactive group.

The reactive group is any of the hydroxyl group and the amino group. In other words, the triphenylbenzene compound includes, as the reactive group, only the hydroxyl group, only the amino group, or both of the hydroxyl group and the amino group.

Note, however, that one or more of R1 to R15 is the reactive group. A reason for this is that it is necessary for the triphenylbenzene compound to include one or more reactive groups in order for the triphenylbenzene compound to function as the curing agent. As long as this condition is satisfied, the number of reactive groups, a position of introduction, and so forth are not particularly limited. In particular, it is preferable that two or more of R1 to R15 be the hydroxyl groups. A reason for this is that this makes the epoxy compound and the first triphenylbenzene compound react with each other easily.

In particular, it is preferable that one or two or more of the following three conditions be satisfied for the kinds of R1 to R15.

A first condition is that, preferably, one or more of R1 to R5 is the reactive group, one or more of R6 to R10 is the reactive group, and one or more of R11 to R15 is the reactive group. A reason for this is that, in a case where the total number of reactive groups is three or more, the positions at which the respective three or more reactive groups are introduced are dispersed to the respective first to third peripheral benzene rings and thus the epoxy compound and the triphenylbenzene compound react with each other easily.

A second condition is that, preferably, one of R1 to R5 is the reactive group, one of R6 to R10 is the reactive group, and one of R11 to R15 is the reactive group. A reason for this is that, in a case where the total number of reactive groups is three, the positions at which the respective three reactive groups are introduced are dispersed to the respective first to third peripheral benzene rings and thus the epoxy compound and the triphenylbenzene compound react with each other easily.

A third condition is that, preferably, R1 to R15 are each any of the hydrogen group and the hydroxyl group, or R1 to R15 are each any of the hydrogen group and the amino group. In other words, it is preferable that the triphenylbenzene compound include, as the reactive group, only one of the hydroxyl group and the amino group. A reason for this is that this makes it possible to obtain sufficient reactivity for the triphenylbenzene compound, and makes the triphenylbenzene compound synthesizable easily.

Specific examples of the triphenylbenzene compound include compounds expressed by the following respective expressions (1-1) and (1-2). A reason for this is that the foregoing first to third conditions are satisfied.

[Chemical Formula 4]

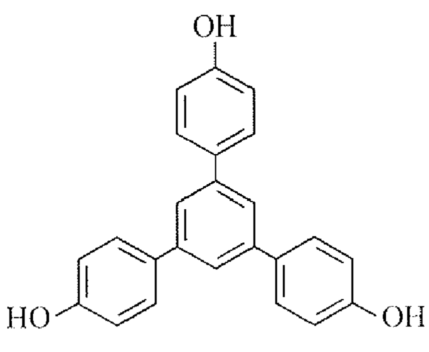

(1-1)

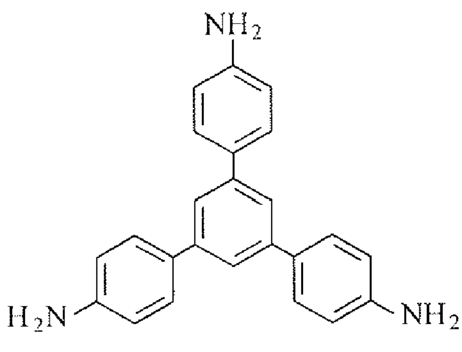

(1-2)

The compound expressed by the expression (1-1) is 1,3,5-tris(4-hydroxyphenyl)benzene. This compound includes only the hydroxyl group as the reactive group, and the number of hydroxyl groups is three. The compound expressed by the expression (1-2) is 1,3,5-tris(4-aminophenyl)benzene. This compound includes only the amino group as the reactive group, and the number of amino groups is three.

[Inorganic Particle]

The inorganic particle as the heat-conducting material includes one or both of the magnesium oxide (absolute specific gravity = 3.65 g/cm$^3$) and the aluminum nitride (absolute specific gravity = 3.26 g/cm$^3$) as described above. Hence, the inorganic particle may include only the magnesium oxide, only the aluminum nitride, or both of them. In the following, one or both of the magnesium oxide and the aluminum nitride is simply referred to as "magnesium oxide or the like". The particles of the magnesium oxide or the like as the inorganic particle are dispersed in the resin component (including the epoxy compound and the triphenylbenzene compound.).

A reason why the inorganic particle includes the magnesium oxide is that the magnesium oxide is high in both thermal conductivity (40 W/(m·K) to 62 W/(m·K)) and volume resistivity (> $10^{14}$ Ω·cm), and that an insulation property and the heat-conducting property of the resin composition increase accordingly.

Similarly, a reason why the inorganic particle includes the aluminum nitride is that the aluminum nitride is high in both thermal conductivity (90 W/(m·K) to 200 W/(m·K)) and volume resistivity (> $10^{14}$ Ω·cm), and that the insulation property and the heat-conducting property of the resin composition increase accordingly.

A configuration of the inorganic particle is not particularly limited. Specifically, a shape of the inorganic particle is any kind or two or more kinds of, for example, a spherical shape, a substantially spherical shape, a fibrous shape, an indefinite shape, and so forth. In particular, the spherical shape and the substantially spherical shape are preferable. The inorganic particle has a mean particle diameter (median diameter D50) that is, for example, from 1 μm to 100 μm, and preferably from 3 μm to 70 μm. Note that two or more kinds of inorganic particles that are different from each other in above-described shape, above-described mean particle diameter, etc., may be used.

A content of the inorganic particle in the resin composition is not particularly limited. In particular, it is preferable that the content of the inorganic particle be from 40 volume% to 70 volume%. A reason for this is that this sufficiently increases strength of the resin cured product while maintaining the high heat-conducting property.

More specifically, if the content of the inorganic particle is smaller than 40 volume%, the superior heat-conducting property derived from the above-described magnesium oxide or the like is not utilized enough, which may possibly result in a decrease in the heat-conducting property of the resin cured product. On the other hand, if the content of the inorganic particle is larger than 70 volume%, the content of the resin component (including the epoxy compound and the triphenylbenzene compound.) decreases relatively, which may possibly result in lack of binding force of the resin composition itself and lack of strength of the resin cured product.

Note that the inorganic particle may include, together with the magnesium oxide or the like, any kind or two or more kinds of other inorganic materials. Examples of other inorganic materials include an aluminum oxide ($Al_2O_3$) and a boron nitride (BN).

In a case where the inorganic particle includes other inorganic materials together with the magnesium oxide or the like, the content of the magnesium oxide or the like in the inorganic particle is not particularly limited. In particular, it is preferable that the content of the magnesium oxide or the like in the inorganic particle be from 70 mass% to 100 mass%. A reason for this is that this obtains the high heat-conducting property.

[Phosphorus]

The phosphorus as the flame retardant mainly forms, on the surface of the resin component, a coating (an adhesive film) that includes the phosphorus as a constituent element upon burning. The coating suppresses the burning and the phosphorus thus exerts its flame retardancy.

The phosphorus may be included in any form in the resin composition as long as the phosphorus is included in the resin composition as described above.

Specifically, the phosphorus may be included in the epoxy compound as the constituent element as described above. Alternatively, in a case where the resin composition includes any kind or two or more kinds of other materials as described later, the phosphorus may be included, as the constituent element, in the any kind or two or more kinds of other materials.

In particular, it is preferable that the phosphorus be included in the epoxy compound as the constituent element (a so-called flame-retardant element). A reason for this is that this allows the epoxy compound to serve both as the main agent (the thermosetting resin) and as a phosphorus-containing component (the flame retardant), thus eliminating necessity to use any other material (such as an additive that includes the phosphorus as the constituent element) in order to cause the phosphorus to be contained in the resin composition.

[Other Materials]

The resin composition may include any kind or two or more kinds of other materials together with the epoxy compound, the triphenylbenzene compound, the inorganic particle, and the phosphorus that are described above.
Examples of other materials include an additive, a solvent, and any other curing agent, although the kinds of other materials are not particularly limited.
Examples of the additive include a curing catalyst and a coupling agent. Specific examples of the curing catalyst include phosphine, imidazole, and their derivatives. Examples of the derivative of the imidazole include 2-ethyl-4-methylimidazole. Specific examples of the coupling agent include a silane coupling agent and a titanate coupling agent.
The solvent is used to disperse or dissolve the epoxy compound and the triphenylbenzene compound in the liquid-state resin composition. The solvent is any kind or two or more kinds of organic solvents. Specific examples of the organic solvent include methyl ethyl ketone, methyl cellosolve, methyl isobutyl ketone, dimethylformamide, propylene glycol monomethylether, toluene, xylene, acetone, 1,3-dioxolane, N-methylpyrrolidone, and γ-butyrolactone.
Any other curing agent is a compound that does not include 1, 3, 5-triphenylbenzene but includes one or more reactive groups. Specific examples of any other curing agent include phenol, amine, and acid anhydride.

<1-2. Manufacturing Method>

For example, the resin composition is manufactured through the following procedure. In the following, a description is given of a case where the phosphorus-containing epoxy compound is used as the epoxy compound, for example.
In a case where the solid resin composition is to be obtained, the phosphorus-containing epoxy compound, the triphenylbenzene compound, and the inorganic particle are mixed. The phosphorus-containing epoxy compound may be crushed before the mixing in a case where the phosphorus-containing epoxy compound in, for example, the massive state is to be used. A fact that the crushing may be performed before the mixing also applies similarly to the triphenylbenzene compound. This obtains the solid resin composition that includes the phosphorus-containing epoxy compound, the triphenylbenzene compound, and the inorganic particle.
It is to be noted that the resin composition may be shaped on an as-necessary basis with use of, for example, a mold after the solid resin composition is obtained.
In a case where the liquid resin composition is to be obtained, the above-described mixture of the phosphorus-containing epoxy compound, the triphenylbenzene compound, and the inorganic particle is added with a solvent, following which the solvent is stirred with use of a stirring device such as a mixer. This disperses or dissolves the phosphorus-containing epoxy compound, the triphenylbenzene compound, and the inorganic particle in the solvent. Thus, the liquid resin composition is obtained that includes the phosphorus-containing epoxy compound, the triphenylbenzene compound, and the inorganic particle.
The solid resin composition may be heated to melt the resin composition in a case where the liquid resin composition is to be obtained alternatively. In this case, the molten material of the resin composition may be shaped on an as-necessary basis with use of, for example, a mold followed by cooling of the molten material.
Note that a compound in a solid state such as a powder state and a massive state, a compound in a liquid state, or a combination of both of them may be used as the epoxy compound such as the phosphorus-containing epoxy compound. Similarly, a compound in a solid state such as a powder state and a massive state, a compound in a liquid state, or a combination of both of them may be used as the curing agent such as the triphenylbenzene compound. What has been described here also applies similarly to any other material described above.

<1-3. Action and Effect>

The resin composition includes the epoxy compound, the triphenylbenzene compound expressed by the expression (1), the inorganic particle (including one or both of the magnesium oxide and the aluminum nitride.), and the phosphorus, and the content of the phosphorus is from 0.5 mass% to 4.3 mass%. In this case, the resin cured product becomes difficult to burn and the high thermal conductivity is obtained for the resin cured product as described above. Further, this makes it difficult for the resin cured product to cause the tracking phenomenon. Hence, it is possible to obtain a superior thermal characteristic.
In particular, it is possible to achieve higher effect when the content of the phosphorus is from 0.8 mass% to 4 mass%. In this case, when the content of the phosphorus is from 0.8 mass% to 2 mass%, it is possible to obtain even higher effect owing to the significant increase in the tracking resistance. Further, the epoxy compound serves both as the main agent and the flame retardant when the phosphorus is included in the epoxy compound as the constituent element, making it possible to achieve higher effect.
Further, the epoxy compound and the triphenylbenzene compound react with each other easily when one or

more of R1 to R5 is the reactive group, one or more of R6 to R10 is the reactive group, and one or more of R11 to R15 is the reactive group in the expression (1), making it possible to achieve a higher effect. In this case, it is possible to achieve a higher effect similarly when one of R1 to R5 is the reactive group, one of R6 to R10 is the reactive group, and one of R11 to R15 is the reactive group.

In addition, it is possible to achieve a higher effect when R1 to R15 are each any of the hydrogen group and the hydroxyl group in the expression (1), or R1 to R15 are each any of the hydrogen group and the amino group in the expression (1).

Further, it is possible to achieve a higher effect when the triphenylbenzene compound includes one or both of the compounds expressed by the respective expressions (1-1) and (1-2).

<1-4. Detailed Reason>

A detailed reason as to why the foregoing action and effect are obtained for the resin composition of the invention is as follows.

As described above, an epoxy composition sometimes includes a bromine-containing epoxy compound and an inorganic particle such as an aluminum oxide and a magnesium oxide to increase a heat-conducting property and suppress ignition and burning characteristics. The bromine may serve as a flame retardant (a flame-retardant element) as with the phosphorus, and thus an epoxy compound including the bromine as a constituent element (the bromine-containing epoxy compound) exerts flame retardancy as with the phosphorus-containing epoxy compound.

The use of the bromine-containing epoxy compound, however, involves the decrease in the starting temperature of thermal composition of the resin cured product when the content of the bromine-containing epoxy compound in the resin composition is increased to increase the flame retardancy, making it easier for the tracking phenomenon to occur. The bromine-containing epoxy compound is not so high in thermal conductivity and thus the thermal conductivity of the resin cured product does not become sufficiently high.

Further, the magnesium oxide as the inorganic particle has the high thermal conductivity and the high volume resistivity, but has, on the other hand, a property of being dissolved easily in water and an ammonium chloride solution at a high temperature. Combining the above-described bromine-containing epoxy compound with the above-described magnesium oxide thus results in easier occurrence of the tracking phenomenon of the resin cured product.

For these reasons, the combined use of the bromine-containing epoxy compound and the inorganic particle (the magnesium oxide) involves insufficiency of the tracking resistance, which is one of the important characteristics required for the resin cured product as an organic insulating material, and thus involves difficulties in increasing together the three characteristics, i.e., the heat-conducting property, the flame retardancy, and the tracking resistance.

In contrast, the resin composition of the invention includes the phosphorus-containing epoxy compound and the inorganic particle (the magnesium oxide or the like).

The use of the phosphorus-containing epoxy compound does not involve the decrease in the starting temperature of the thermal composition of the resin cured product even when the content of the phosphorus-containing epoxy compound in the resin composition is increased to increase the flame retardancy, making it difficult for the tracking phenomenon to occur.

Further, combining the phosphorus-containing epoxy compound with the magnesium oxide does not result in easier occurrence of the tracking phenomenon of the resin cured product.

For these reasons, the combined use of the phosphorus-containing epoxy compound and the inorganic particle (the magnesium oxide or the like) sufficiently increases the tracking resistance, which is one of the important characteristics required for the resin cured product as the organic insulating material, making it possible to increase together the three characteristics, i.e., the heat-conducting property, the flame retardancy, and the tracking resistance.

Here, a difference in tracking resistance described above is presumably due to a difference between a mechanism by which the bromine exerts its flame retardancy and a mechanism by which the phosphorus exerts its flame retardancy.

Specifically, a gas that includes bromide is generated when the resin component decomposes upon burning in a case where a material is used that includes the bromine as a constituent element (the bromine-containing epoxy compound) in order to use the bromine as the flame retardant. The bromine exerts its flame retardancy owing to suppression of the burning by the gas. The gas, however, has a property of spreading easily. Hence, it is necessary to increase a used amount of the bromine-containing epoxy compound as described above in order to sustain a flame-retarding effect derived from the bromine.

In contrast, in a case where a material is used that includes the phosphorus as the constituent element (the phosphorus-containing epoxy compound) in order to use the phosphorus as the flame retardant, the coating that includes the phosphorus as the constituent element is formed on the surface of the resin component when the resin component is decomposed upon the burning as described above. The coating suppresses the burning and the phosphorus thus exerts its flame retardancy. Unlike the above-described gas, the coating has a property of being fixed easily. Hence, a

small amount of the phosphorus-containing epoxy compound suffices in order to sustain the flame-retarding effect derived from the phosphorus. More specifically, only the amount necessary for the formation of the coating suffices.

For these reasons, a large difference occurs between a required amount of the bromine-containing epoxy compound and a required amount of the phosphorus-containing epoxy compound, due to the difference in mechanism by which the flame retardancy is exerted between the bromine and the phosphorus. This, however, does not mean that the content of the phosphorus can take any value in order to increase the flame retardancy in a case where the phosphor-containing epoxy compound is used, and it is necessary for the content to be within an appropriate range (= 0.5 mass% to 4.3 mass%) as described above. In other words, the foregoing appropriate content of the phosphor is a special condition that is applied only to a system in which the phosphor as the flame retardant and the magnesium oxide or the like as the inorganic particle are combined in order to cause the flame retardancy derived from the phosphorus to be exerted substantially, and is a condition inapplicable to any other system. The term "any other system" refers to, for example, a system in which the bromine as the flame retardant and the magnesium oxide or the like as the inorganic particle are combined as described above, or other systems.

<2. Resin Sheet>

A description is given next of a resin sheet according to one embodiment of the invention. In the following, the resin composition already described is referred to as a "resin composition of the invention".

The resin sheet includes the resin composition of the invention. A configuration of the resin sheet is not particularly limited as long as the resin sheet includes the resin composition of the invention. In other words, the resin sheet may not be provided with other components together with the resin composition, or may be provided with other components together with the resin composition.

<2-1. Configuration>

FIG. 1 illustrates a cross-sectional configuration of a resin sheet 10. The resin sheet 10 is a resin composition (a resin composition layer 1) shaped into a sheet shape. More specifically, the resin sheet 10 is a monolayer body configured by the single resin composition layer 1. The resin sheet 10 is not particularly limited in thickness, for example. A configuration of the resin composition layer 1 is similar to the configuration of the resin composition of the invention, with exception that the resin composition layer 1 is shaped into the sheet shape.

FIG. 2 illustrates a cross-sectional configuration of a resin sheet 20. The resin sheet 20 is a laminate in which the plurality of resin composition layers 1 are stacked. The number of resin composition layers 1 (the number of stacks) stacked in the resin sheet 20 is not particularly limited as long as the number of layers is two or more. FIG. 2 illustrates a case where the number of stacks of the resin composition layers 1 is three, for example. Note that a configuration of each of the resin composition layers 1 in the resin sheet 20 is not particularly limited. In other words, the configurations of the resin compositions in the respective resin composition layers 1 may be the same as each other, or may be different from each other. It is a matter of course that some resin composition layers 1 of the plurality of resin composition layers 1 may be the same as each other in configuration of the resin composition.

FIG. 3 illustrates a cross-sectional configuration of a resin sheet 30. The resin sheet 30 is provided with a core 2 together with the resin composition (the resin composition layer 1) shaped into the sheet shape. For example, the resin sheet 30 has a three-layer structure in which the core 2 is interposed between the two resin composition layers 1.

The core 2 includes any kind or two or more kinds of materials such as fibrous materials and non-fibrous materials, and is shaped into a sheet shape. Examples of the fibrous material include glass fiber, carbon fiber, metal fiber, natural fiber, and synthetic fiber. Examples of fibrous material shaped into the sheet shape include woven fabric and non-woven fabric. Specific examples of the synthetic fiber include polyester fiber and polyamide fiber. Examples of the non-fibrous material include a polymer compound. Examples of the non-fibrous material shaped into the sheet shape include a polymer film. Specific examples of the polymer compound include polyethylene terephthalate (PET).

It is preferable that a thickness of the core 2 be, for example, from 0.03 mm to 0.2 mm in terms of mechanical strength and dimensional stability, although the core 2 is not particularly limited in thickness.

The resin composition layer 1 to be used for the resin sheet 30 may be solely a single layer, or may be two or more layers. A fact that a single layer or two or more layers suffice as described above also applies similarly to the core 2.

Further, the resin sheet 30 is not limited to the three-layer structure in which the core 2 is interposed between the two resin composition layers 1, and may have a two-layer structure in which the resin composition layer 1 and the core 2 are stacked. Note that two or more resin sheets 20 may be stacked.

<2-2. Manufacturing Method>

For example, a procedure similar to the method of manufacturing the resin composition of the invention is used

in a case where the resin sheet 10 is to be manufactured.

Specifically, in a case where the solid resin composition is to be used, the resin composition is so shaped as to be in the sheet shape to thereby form the resin composition layer 1. In this case, the solid resin composition may be shaped as it is, or a molten material of the solid resin composition may be shaped. In a case where the molten material is to be shaped, the solid resin composition is heated to melt the resin composition first. Thereafter, the molten material of the resin composition is shaped followed by cooling of a shaped product.

In a case where the liquid resin composition is to be used, a surface of a support such as a polymer film is applied with the liquid resin composition, following which the liquid resin composition is dried. This volatilizes the solvent contained in the liquid resin composition and thereby results in shaping of the resin composition into the sheet shape on the surface of the support. In other words, the resin composition turns into a film on the surface of the support, thereby forming the resin composition layer 1. Thereafter, the resin composition layer 1 is removed from the support.

The above-described procedure for the formation of the resin composition layer 1 is repeated to stack the plurality of resin composition layers 1 in a case where the resin sheet 20 is to be manufactured. In this case, the laminate may be applied with pressure while performing heating on an as-necessary basis after the formation of the laminate in which the plurality of resin composition layers 1 are stacked. This causes the resin composition layers 1 to be closely attached to each other.

In a case where the resin sheet 30 having the three-layer structure is to be manufactured, both sides of the core 2 are applied with the liquid resin composition, following which the liquid resin composition is dried, for example. This forms the two resin composition layers 1 in such a manner as to interpose the core 2 therebetween. In a process of applying the liquid resin composition, a surface of the core 2 is coated with the liquid resin composition and the inside of the core 2 is impregnated with part of the liquid resin composition in a case where the core 2 includes the fibrous material, or the surface of the core 2 is coated with the liquid resin composition in a case where the core 2 includes the non-fibrous material.

It is a matter of course that only one side of the core 2 may be applied with the liquid resin composition in a case where the resin sheet 30 having the two-layer structure is to be manufactured.

Note that, for example, the solid resin composition is heated to melt the resin composition followed by immersion of the core 2 in the molten material in a case where the resin sheet 30 is to be manufactured. In this case, the core 2 is cooled after the core 2 is taken out from the molten material. This forms the resin composition layer 1 on both sides of the core 2.

Here, the liquid resin composition turns into the film (solidifies) in a drying process as described above in a case where the liquid resin composition is used to manufacture the resin sheets 10, 20, and 30. Note, however, that the wording "turns into the film (solidifies)" as described herein refers to changing of a substance, which is in a state in which the substance has fluidity (a liquid state), to a self-supportable state (a solid state), and encompasses a so-called semi-cured state. In other words, in a case where the liquid resin composition turns into the film, a curing reaction is not completed substantially and thus the resin composition is substantially in an uncured state. Hence, it is preferable that a drying condition upon turning the liquid resin composition into the film be a condition that does not complete the curing reaction substantially. Specifically, it is preferable that a drying temperature be from 60°C to 150°C and a drying time be from one minute to 120 minutes, and it is more preferable that the drying temperature be from 70°C to 120°C and the drying time be from 3 minutes to 90 minutes.

A fact that the condition is preferable that does not complete the curing reaction substantially also applies similarly to a case where the molten material of the solid resin composition is used to manufacture the resin sheets 10, 20, and 30. In other words, a heating condition (a heating temperature and a heating time) upon melting the solid resin composition is preferably a condition that does not complete the curing reaction substantially.

<2-3. Action and Effect>

The resin sheet includes the above-described resin composition of the invention. Hence, it is possible to obtain the superior thermal characteristic for a reason similar to that of the resin composition. Other actions and effects are similar to those of the resin composition of the invention.

<3. Resin Cured Product>

A description is given next of a resin cured product according to one embodiment of the invention.

<3-1. Configuration>

The resin cured product includes the cured reactant of the above-described resin composition of the invention. More specifically, the resin cured product includes the cured reactant of the epoxy compound and the triphenylbenzene

compound. In the cured reactant, the epoxy group included in the epoxy compound and the reactive group included in the triphenylbenzene compound have undergone the cross-linking reaction, thus forming a so-called crosslink network.

Note that the resin cured product is not particularly limited in shape. Specifically, the resin cured product may be so shaped as to be in a desired shape, or may not be shaped.

Further, the resin cured product is not particularly limited in property. Specifically, the resin cured product may have quality (rigidity) that makes it difficult for the resin cured product to deform in response to external force, or may have quality (flexibility or plasticity) that makes it easy for the resin cured product to deform in response to the external force.

<3-2. Manufacturing Method>

The resin composition is heated in a case where the resin cured product is to be manufactured. This results in the curing reaction of the resin composition, thereby obtaining the resin cured product as the cured reactant.

A heating condition such as a heating temperature and a heating time is not particularly limited. It is, however, preferable that the condition be a condition that progresses the curing reaction substantially unlike the above-described method of manufacturing the resin sheet.

<3-3. Action and Effect>

The resin cured product includes the cured reactant of the above-described resin composition of the invention. Hence, it is possible to obtain the superior thermal characteristic for a reason similar to that of the resin composition. Other actions and effects are similar to those of the resin composition of the invention.

<4. Resin Substrate>

A description is given next of a resin substrate according to one embodiment of the invention. In the following, the resin sheet and the resin cured product that are already described are respectively referred to as a "resin sheet of the invention" and a "resin cured product of the invention".

The resin substrate is one of application examples of the above-described resin cured product of the invention, and includes the resin cured product of the invention. The resin substrate to be described here includes, for example, the cured reactant of the resin sheet of the invention. A configuration of the resin substrate is not particularly limited as long as the resin substrate includes the cured reactant of the resin sheet of the invention.

Note that what has been described regarding the property of the resin cured product (presence of rigidity) also applies similarly to a property of the resin substrate.

That is, the resin substrate may have rigidity, or may have flexibility or plasticity. This means that, as long as the resin substrate includes the cured reactant of the resin sheet, for example, the resin substrate described here not only encompasses the cured reactant having the rigidity but also the cured reactant having the flexibility or the plasticity. The cured reactant having the flexibility or the plasticity is, for example, an adhesion tape as a sheet-shaped adhesive, or the like.

Further, the number of cured reactants of the resin sheets included in the resin substrate is not particularly limited. In other words, the number of cured reactants of the resin sheets may be only one, or may be two or more. In a case where the number of cured reactants of the resin sheets is two or more, the two or more cured reactants of the resin sheets may be stacked.

<4-1. Configuration>

FIG. 4 illustrates a cross-sectional configuration of a resin substrate 40. The resin substrate 40 is the cured reactant of the resin sheet 10 illustrated in FIG. 1. In other words, the resin substrate 40 is the cured reactant of the resin composition layer 1 (a resin cured product layer 3). More specifically, the resin substrate 40 is a monolayer body configured by the single resin cured product layer 3.

FIG. 5 illustrates a cross-sectional configuration of a resin substrate 50. The resin substrate 50 is the cured reactants of the resin sheets 20 illustrated in FIG. 2. More specifically, the resin substrate 50 is a laminate in which the plurality of cured reactants of the resin composition layers 1 (the resin cured product layers 3) are stacked. The number of resin cured product layers 3 to be stacked (the number of stacks) is not particularly limited as long as the number of layers is two or more. FIG. 5 illustrates a case where the number of stacks of the resin cured product layers 3 is three, for example.

FIG. 6 illustrates a cross-sectional configuration of a resin substrate 60. The resin substrate 60 is the resin cured products of the resin sheets 30 illustrated in FIG. 3. More specifically, the resin substrate 60 has a three-layer

structure in which the single core 2 is interposed between the two resin cured product layers 3.

FIG. 7 illustrates a cross-sectional configuration of a resin substrate 70. In the resin substrate 70, two or more cured reactants of the resin sheets 30 are stacked. Here, three cured reactants of the resin sheets 30 are stacked, for example. In other words, the three-layer structure is formed in which the single core 2 is interposed between the two resin cured product layers 3, and three stages of such three-layer structures are laid on top of each other.

Note that the number of above-described three-layer structures to be laid on top of each other (the number of stages) is not limited to three stages, and may be two stages or may be four or more stages. It is possible to set the number of stages as appropriate on the basis of a condition such as a thickness and strength of the resin substrate 70.

The resin substrate 70 may be provided with an unillustrated metal layer. The metal layer is provided on a surface of the uppermost resin cured product layer 3 and on a surface of the lowermost resin cured product layer 3, for example.

The metal layer includes any kind or two or more kinds of copper, nickel, and aluminum, for example. Further, for example, the metal layer includes any kind or two or more kinds of a metal foil and a metal plate. The metal layer may be a monolayer, or may be a multilayer. The metal layer may have a thickness from 3 $\mu$m to 150 $\mu$m, for example, although the metal layer is not particularly limited in thickness. The resin substrate 70 provided with the metal layer is a so-called metal-clad substrate.

Note that the metal layer may be provided only on the surface of the uppermost resin cured product layer 3, or may be provided only on the surface of the lowermost resin cured product layer 3.

The resin substrate 70 provided with the metal layer may be subjected to any kind or two or more kinds of various processes such as an etching process and a hole making process on an as-necessary basis. In this case, the resin substrate 70, the metal layer having been subjected to the above-described various processes, and any kind or two or more kinds of the resin sheets 10, 20, and 30 may be overlaid with each other to form a multilayer substrate.

A fact that the metal layer may be provided and the multilayer substrate may be formed applies not only to the resin substrate 70 but also to the above-described resin substrates 40, 50, and 60 similarly.

<4-2. Manufacturing Method>

The resin sheet 10 is heated in a case where the resin substrate 40 is to be manufactured. This substantially completes the curing reaction of the resin composition in the resin composition layer 1 as described above, thereby forming the resin cured product layer 3 as the resin cured product of the resin composition layer 1 as illustrated in FIG. 4.

The resin sheet 20 is heated in a case where the resin substrate 50 is to be manufactured. This substantially completes the curing reaction of the resin composition in each of the resin composition layers 1 as described above, thereby forming the plurality of resin cured product layers 3 as the cured reactants of the resin composition layers 1 as illustrated in FIG. 5.

The resin sheet 30 is heated in a case where the resin substrate 60 is to be manufactured. This substantially completes the curing reaction of the resin composition in each of the resin composition layers 1 as described above, thereby forming the resin cured product layer 3 as the cured reactant of the resin composition layer 1 on both sides of the core 2 as illustrated in FIG. 6.

FIG. 8 illustrates a cross-sectional configuration corresponding to FIG. 7 to describe a method of manufacturing the resin substrate 70. In a case where the resin substrate 70 is to be manufactured, the three resin sheets 30 are stacked first as illustrated in FIG. 8. This obtains a laminate of the three resin sheets 30. Thereafter, the laminate is heated. This substantially completes, in each of the resin sheets 30, the curing reaction of the resin composition in each of the resin composition layers 1, thereby forming the resin cured product layer 3 as the cured reactant of the resin composition layer 1 on both sides of each of the cores 2 as illustrated in FIG. 7.

In a case where the molten material of the resin composition is to be used to manufacture the resin sheets 10, 20, and 30, the curing reaction is to be prevented from being completed substantially upon melting of the resin composition. Hence, it is preferable that a temperature that heats the resin composition in order to obtain the molten material be lower than a temperature at which the curing reaction of the resin composition substantially completes. In other words, a melt temperature of the resin composition is preferably lower than the temperature at which the curing reaction of the resin composition substantially completes.

To give one example, in general, a maximum value (a maximum temperature) of a heating temperature upon shaping becomes about 250°C in a shaping process that uses a mold. Hence, the melt temperature of the resin composition is preferably a temperature that is lower than 250°C, and is more preferably equal to or less than 200°C.

The term "melt temperature" as described herein refers to a temperature at which a state of the resin composition changes from the solid state to a flow (melt) state while the curing reaction of the resin composition is prevented from being completed substantially. In order to identify the melt temperature, a state of the resin composition is observed visually while heating the resin composition with use of a heating apparatus such as a hot plate, for example. In this case, the heating temperature is raised gradually while mixing the resin composition with use of a paddle, for example.

A temperature at which the resin composition thus starts to melt is the melt temperature.

In a case where the maximum temperature upon the shaping is about 250°C as described above, the heating temperature upon the shaping is a temperature that is at least 50°C higher than the melt temperature of the resin composition, specifically from 100°C to 250°C, and a heating time is about one minute to about 300 minutes, for example. This sufficiently heats the resin composition at the temperature at which the curing reaction substantially completes and thus allows the curing reaction to progress evenly.

Note that, in the shaping process that uses the mold, the resin composition may be applied with pressure with use of a pressing machine or the like where necessary, or a pressure of an environment under which the resin composition is present may be increased or decreased where necessary.

In particular, in a case where the resin substrate 70 is to be manufactured, it is preferable that the laminate be heated while applying the pressure to the laminate in a direction in which the resin sheets 30 are stacked. A reason for this is that this increases, for example, adhesion of the resin sheets 30. One example of a heating condition and a pressure applying condition in this case involves the heating temperature of 100°C to 250°C, the heating time of one minute to 300 minutes, and the pressure of the pressure application of 0.5 MPa to 8 MPa, although the heating condition and the pressure applying condition are not particularly limited.

<4-3. Action and Effect>

The resin substrate includes the resin cured product of the invention. Hence, it is possible to obtain the superior thermal characteristic for a reason similar to that of the resin cured product. Other actions and effects are similar to those of the resin cured product of the invention.

**Examples**

A description is given in detail of Examples of the invention.

(Experimental Examples 1 to 21)

A resin substrate 70 was manufactured that was configured by the laminate in which the plurality of resin substrates 60 were stacked as illustrated in FIGs. 6 and 7. It is to be noted that the content (pts.mass) to be described hereinafter is a value in nonvolatile content equivalent.

The epoxy compound, the curing agent, and the additive (the curing catalyst) were first mixed for manufacturing the resin substrate 70. In this case, a rate of mixture between the epoxy compound and the curing agent was so adjusted that a ratio between the number of epoxy groups contained in the epoxy compound and the number of active hydrogen contained in the curing agent becomes 1:1.

The kind and the content (pts.mass) in the mixture of each of the epoxy compound and the curing agent as well as the kind and the content (mass%) in the mixture of the flame-retardant element are as illustrated in Tables 1 and 2. The content of the flame-retardant element is determined by a procedure that is similar to the above-described procedure for determining the content of the phosphorus.

The following five kinds of compounds were used as the epoxy compound. Note that a compound A, a compound B, a compound C, a compound D, and a compound E are respectively denoted as "c. A", "c. B", "c. C", "c. D", and "c. E" in the Tables 1 and 2 for the purpose of simplifying the description of the series of compounds.

Compound A (non-phosphorus-containing epoxy compound):
A mixture of 3,3',5,5'-tetramethyl-4,4'-bis(glycidyloxy)-1,1'-biphenyl and 4,4'-biphenyldiylbis(glycidyl ether) (YL6121H available from Mitsubishi Chemical Corporation, mass ratio = 1:1, and average epoxy equivalent = 175)

Compound B (phosphorus-containing epoxy compound):
FX-289Z available from Nippon Steel & Sumikin Chemical Co., Ltd. (average phosphorus content = 2 mass% and average epoxy equivalent = 225)

Compound C (phosphorus-containing epoxy compound):
A modified product of the compound B (average phosphorus content = 5 mass% and average epoxy equivalent = 745)

Compound D (phosphorus-containing epoxy compound):
A modified product of the compound B (average phosphorus content = 3 mass% and average epoxy equivalent = 485)

Compound E (bromine-containing epoxy compound):
EPICLON152 available from DIC Corporation (average bromine content = 46 mass% and average epoxy equivalent = 360)

The following three kinds of compounds were used as the curing agent. The presence of "TPB skeleton" illustrated in the Tables 1 and 2 represents whether or not the curing agent includes 1, 3, 5-triphenylbenzene as the skeleton.

THPB:
A compound expressed by the expression (1-1) which is the triphenylbenzene compound (mass-average molecular weight = 354 and average active hydrogen equivalent = 118)

TAPB:
A compound expressed by the expression (1-2) which is the triphenylbenzene compound (mass-average molecular weight = 351 and average active hydrogen equivalent = 58.6)

BMBH:
Polycondensate of 4,4'-bis(methoxymethyl)biphenyl and phenol (average active hydrogen equivalent = 205)

As the curing catalyst, 2-ethyl-4-methylimidazole (imidazole compound 2E4MZ available from Shikoku Chemicals Corporation) was used. The content of the curing catalyst was one pts.mass to the total of the epoxy compound and the curing agent.

The mixture was thereafter fed into a solvent (methyl ethyl ketone), following which the solvent was stirred. This dissolved the epoxy compound and the curing agent in the solvent, and obtained a solution that includes the epoxy compound and the curing agent accordingly. In this case, the concentration of the nonvolatile content was 90 mass%.

Thereafter, the inorganic particle was fed into a solution, following which the solution was stirred. In this case, the magnesium oxide (MgO, available from Ube Material Industries, Ltd., and mean particle diameter = 50 μm), the aluminum nitride (AlN, available from Tokuyama Corporation, and mean particle diameter = 50 μm), and the aluminum oxide ($Al_2O_3$, available from Denki Kagaku Kogyo Kabushiki Kaisya, and mean particle diameter = 40 μm to 50 μm) were used as the inorganic particle. The mean particle diameter is the median diameter D50. Note that the kind and the content (pts.mass) in the solution of the inorganic particle are as illustrated in Tables 1 and 2. This dispersed the inorganic particle in the solution, and obtained the liquid resin composition accordingly.

Thereafter, both sides of the core 2 (glass fiber woven fabric, thickness = 0.05 mm, and fabric weight = 50 $g/m^2$) were applied with the liquid resin composition, following which the liquid resin composition was dried (temperature = 100°C). This formed the resin composition layer 1 on the both sides of the core 2, and obtained the resin sheet 30 (fabric weight = 350 $g/m^2$) illustrated in FIG. 3 accordingly.

Thereafter, six sheets of resin sheets 30 were overlaid to fabricate the laminate illustrated in FIG. 8 (the number of stages of the resin sheets 30 = 6 stages). Finally, the laminate was applied with heat (temperature = 170°C) and pressure (pressure = 1 MPa and time = 20 minutes) with use of a flat-plate pressing machine, following which the laminate was further applied with heat (temperature) = 200°C and pressure (pressure = 4 MPa and time = one hour). In this heating process, the reaction of the resin composition was substantially completed in each of the resin composition layers 1, and thus the resin cured product layers 3 each including the cured reactant of the resin composition were formed. This completed the resin substrate 70 illustrated in FIG. 7 (the number of stages of the resin substrates 60 = 6 stages).

Results illustrated in the Tables 1 and 2 were obtained through examining a thermal characteristic of the resin substrate 70 (the resin cured product layer 3). Here, the examination was performed on the tracking resistance, the flame retardancy, and the heat-conducting property.

To examine the tracking resistance, a tracking resistance test compliant with the Japanese Industrial Standards JIS C 2134 was conducted to define, as a comparative tracking index (CTI), a maximum voltage (V) at which breakdown of a measurement sample does not occur. In this case, five measurement samples were used to conduct the tracking resistance test, in which the five measurement samples were used as a set.

To examine the flame retardancy, a flammability test compliant with UL94 was conducted to determine a flame-retardant class. In this case, five measurement samples were used as with the case of examining the tracking resistance.

To examine the heat-conducting property, the thermal conductivity (W/(m·K)) of a measurement sample was measured. Specifically, first, the resin substrate 70 was cut to fabricate a circular measurement sample (diameter = 10 mm and thickness = 0.9 mm). Thereafter, the measurement sample was analyzed to measure a thermal diffusivity coefficient $\alpha$ ($m^2/s$), with use of a thermal conductivity measuring apparatus (TC series available from Advance Riko, Inc. (former ULVAC-Riko, Inc.)). In addition, specific heat Cp of the measurement sample was measured with use of a differential scanning calorimeter (DSC), where sapphire was used as a reference sample. Further, a density r of the measurement sample was measured with use of the Archimedean method. Finally, the thermal conductivity $\lambda$ (W/(m·K)) was calculated on the basis of the following mathematical expression (B).

$$\lambda = \alpha \times Cp \times r \qquad \ldots (B)$$

(where $\lambda$ is the thermal conductivity (W/(m·K)), $\alpha$ is the thermal diffusivity coefficient ($m^2/s$), Cp is the specific heat (J/kg·K), and r is the density ($kg/m^3$).)

[Table 1]

| Experimental Examples | Epoxy compound | | Curing agent | | | Inorganic particle | | Flame-retardant element | | CTI (V) | Flame-retardant class | Thermal conductivity (W/(m·K)) |
|---|---|---|---|---|---|---|---|---|---|---|---|---|
| | Kind | Content (pts.mass) | Kind | TPB skeleton | Content (pts.mass) | Kind | Content (pts.mass) | Kind | Content (mass%) | | | |
| 1 | c.A+c.B | 36+27 | THPB | Included | 36 | MgO | 230 | P | 0.5 | 500 | V-1 | 3.2 |
| 2 | c.A+c.B | 22+41 | THPB | Included | 36 | MgO | 230 | P | 0.8 | 500 | V-0 | 3.2 |
| 3 | c.B | 65 | THPB | Included | 34 | MgO | 230 | P | 1.3 | 450 | V-0 | 3.2 |
| 4 | c.A+c.C | 52+11 | THPB | Included | 36 | MgO | 230 | P | 0.5 | 500 | V-1 | 3.2 |
| 5 | c.A+c.C | 45+20 | THPB | Included | 34 | MgO | 230 | P | 1.0 | 475 | V-0 | 3.2 |
| 6 | c.A+c.C | 32+40 | THPB | Included | 27 | MgO | 230 | P | 2.0 | 450 | V-0 | 3.1 |
| 7 | c.A+c.C | 4+80 | THPB | Included | 15 | MgO | 230 | P | 4.0 | 400 | V-0 | 3.0 |
| 8 | c.C | 86 | THPB | Included | 13 | MgO | 230 | P | 4.3 | 375 | V-0 | 2.9 |
| 9 | c.A+c.D | 35+32 | THPB | Included | 32 | MgO | 230 | P | 1.0 | 500 | V-0 | 3.2 |
| 10 | c.A+c.B | 27+50 | TAPB | Included | 22 | MgO | 230 | P | 1.0 | 500 | V-0 | 3.2 |
| 11 | c.A+c.C | 58+20 | TAPB | Included | 21 | MgO | 230 | P | 1.0 | 500 | V-0 | 3.2 |
| 12 | c.A+c.C | 32+40 | THPB | Included | 27 | AlN | 230 | P | 2.0 | 450 | V-0 | 4.0 |

[Table 2]

| Experimental Examples | Epoxy compound | | Curing agent | | | Inorganic particle | | Flame-retardant element | | CTI (V) | Flame-retardant class | Thermal conductivity (W/(m·K)) |
|---|---|---|---|---|---|---|---|---|---|---|---|---|
| | Kind | Content (pts.mass) | Kind | TPB skeleton | Content (pts.mass) | Kind | Content (pts.mass) | Kind | Content (mass%) | | | |
| 13 | c.A | 59 | THPB | Included | 40 | MgO | 230 | - | - | 500 | Burned | 3.1 |
| 14 | c.A+c.B | 40+21 | THPB | Included | 38 | MgO | 230 | P | 0.4 | 500 | Burned | 3.2 |
| 15 | c.C | 92 | TAPB | Included | 7 | MgO | 230 | P | 4.6 | 375 | V-0 | 2.3 |
| 16 | c.A+c.E | 56+4 | THPB | Included | 39 | MgO | 230 | Br | 1.8 | 325 | Burned | 3.0 |
| 17 | c.A+c.E | 54+6 | THPB | Included | 39 | MgO | 230 | Br | 2.8 | 300 | V-1 | 2.9 |
| 18 | c.A+c.E | 51+10 | THPB | Included | 38 | MgO | 230 | Br | 4.6 | 275 | V-0 | 2.8 |
| 19 | c.A+c.E | 47+15 | THPB | Included | 37 | MgO | 230 | Br | 7.0 | 225 | V-0 | 2.7 |
| 20 | c.A+c.C | 34+20 | BMBH | Not included | 45 | MgO | 230 | P | 1.0 | 250 | V-0 | 2.0 |
| 21 | c.A+c.C | 32+40 | THPB | Included | 27 | $Al_2O_3$ | 230 | P | 2.0 | 500 | V-0 | 1.5 |

The CTI, the flame-retardant class, and the thermal conductivity varied greatly in accordance with the composition of the resin composition.

Specifically, the CTI and the thermal conductivity both increased but the measurement sample was burned in a case where the resin composition included neither the phosphorus nor the bromine (Experimental Example 13).

The CTI and the thermal conductivity both decreased in cases where the resin composition included the bromine (Experimental Examples 16 to 19). In addition thereto, although there were some cases where good determinations were made (V-0 and V-1) for the flame-retardant class, there were some cases where the measurement samples were burned.

Although a good determination (V-0) was made for the flame-retardant class, the CTI and the thermal conductivity both decreased in a case where the curing agent included no TPB skeleton (Experimental Example 20).

The CTI increased and a good determination (V-0) was made for the flame-retardant class, but the thermal conductivity decreased significantly in a case where the aluminum oxide was used as the inorganic particle (Experimental Example 21).

When the resin composition included the phosphorus, cases where the curing agent included the TPB skeleton and the magnesium oxide or the aluminum nitride was used as the inorganic particle (Experimental Examples 1 to 12, 14, and 15) showed great disparity in each of the CTI, the flame-retardant class, and the thermal conductivity in accordance with the content of the phosphorus.

Specifically, the CTI and the thermal conductivity both increased but the measurement sample was burned in a case where the content of the phosphorus was smaller than 0.5 mass% (Experimental Example 14). Further, the CTI increased and the good determination (V-0) was made for the flame-retardant class but the thermal conductivity decreased in a case where the content of the phosphorus was larger than 4.3 mass% (Experimental Example 15).

In contrast, in cases where the content of the phosphorus was from 0.5 mass% to 4.3 mass% (Experimental Examples 1 to 12), the CTI and the thermal conductivity both increased and the good determinations (V-0 and V-1) were made for the flame-retardant class.

In these cases, the better determination (V-0) was made for the flame-retardant class when the content of the phosphorus was equal to or greater than 0.8 mass%. Further, the CTI and the thermal conductivity both increased further when the content of the phosphorus was equal to or less than 4 mass%, and the CTI and the thermal conductivity both increased even further when the content of the phosphorus was equal to or less than 2 mass%.

As can be seen from the results illustrated in the Tables 1 and 2, the tracking resistance, the flame retardancy, and the heat-conducting property were all improved in the resin cured product when the content of the phosphorus was from 0.5 mass% to 4.3 mass% in a case where the resin composition included the epoxy compound, the triphenylbenzene compound expressed by the expression (1), the inorganic particle (including one or both of the magnesium oxide and the aluminum nitride.), and the phosphorus. Hence, a superior thermal characteristic was obtained.

Although the invention has been described by referring to one embodiment and the Examples, the invention is not limited to those described in one embodiment and the Examples, and may be modified in a wide variety of ways.

## Claims

**1.** A resin composition comprising:

an epoxy compound;
a triphenylbenzene compound expressed by the following expression (1);
an inorganic particle including one or both of a magnesium oxide (MgO) and an aluminum nitride (AlN); and phosphorus (P),
a content (mass%) of the phosphorus expressed by the following mathematical expression (A) being from 0.5 mass% to 4.3 mass%,

$$\text{the content (mass\%) of the phosphorus} = (\text{mass of the phosphorus} / \text{mass of nonvolatile content excluding the inorganic particle}) \times 100 \quad \ldots \text{(A)}$$

[Chemical Formula 1]

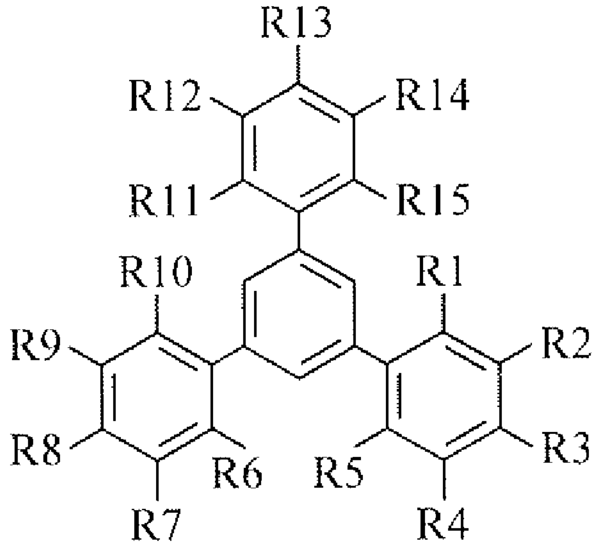

$\cdots$ (1)

(R1 to R15 are each any of a hydrogen group (-H) and a reactive group, and the reactive group is any of a hydroxyl group (-OH) and an amino group ($-NH_2$), where at least one of the R1 to the R15 is the reactive group.)

2. The resin composition according to claim 1, wherein the content of the phosphorus is from 0.8 mass% to 4 mass%.

3. The resin composition according to claim 1 or 2, wherein the content of the phosphorus is from 0.8 mass% to 2 mass%.

4. The resin composition according to any one of claims 1 to 3, wherein the phosphorus is included in the epoxy compound as a constituent element.

5. The resin composition according to any one of claims 1 to 4, wherein
at least one of the R1 to the R5 is the reactive group,
at least one of the R6 to the R10 is the reactive group, and
at least one of the R11 to the R15 is the reactive group.

6. The resin composition according to any one of claims 1 to 5, wherein
one of the R1 to the R5 is the reactive group,
one of the R6 to the R10 is the reactive group, and
one of the R11 to the R15 is the reactive group.

7. The resin composition according to any one of claims 1 to 6, wherein
the R1 to the R15 are each any of the hydrogen group and the hydroxyl group, or
the R1 to the R15 are each any of the hydrogen group and the amino group.

8. The resin composition according to any one of claims 1 to 7, wherein the triphenylbenzene compound includes one or both of compounds expressed by the following respective expressions (1-1) and (1-2).

[Chemical Formula 2]

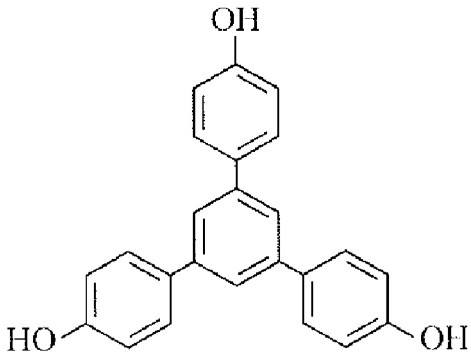

(1-1)

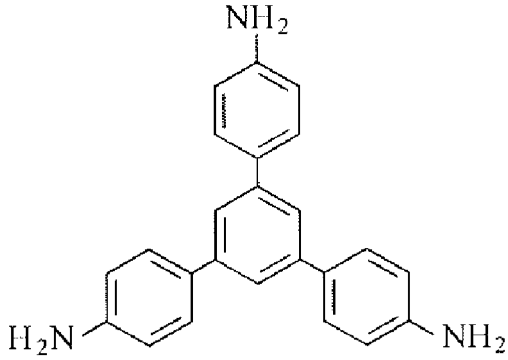

(1-2)

**9.** A resin sheet comprising
the resin composition according to any one of claims 1 to 8.

**10.** A resin cured product comprising
a cured reactant of the resin composition according to any one of claims 1 to 8.

**11.** A resin substrate comprising
a cured reactant of the resin sheet according to claim 9.

**12.** The resin substrate according to claim 11, wherein
the cured reactant comprises two or more cured reactants of the resin sheets, and
the two or more cured reactants of the resin sheets are stacked.

## Patentansprüche

**1.** Harzzusammensetzung, umfassend:

eine Epoxyverbindung,
eine Triphenylbenzolverbindung, die durch den folgenden Ausdruck (1) wiedergegeben wird;
ein anorganisches Partikel, das ein oder beide von Magnesiumoxid (MgO) und Aluminiumnitrid (AlN) enthält; und
Phosphor (P),
wobei ein Gehalt (Massen%) des Phosphors, ausgedrückt durch den folgenden mathematischen Ausdruck (A), 0,5 Massen% bis 4,3 Massen% beträgt,

der Gehalt (Massen%) des Phosphors = (Masse des Phosphors / Masse des nicht-flüchtigen Gehalts mit Ausnahme des anorganischen Partikels) x 100 ... (A) ist,

[Chemische Formel 1]

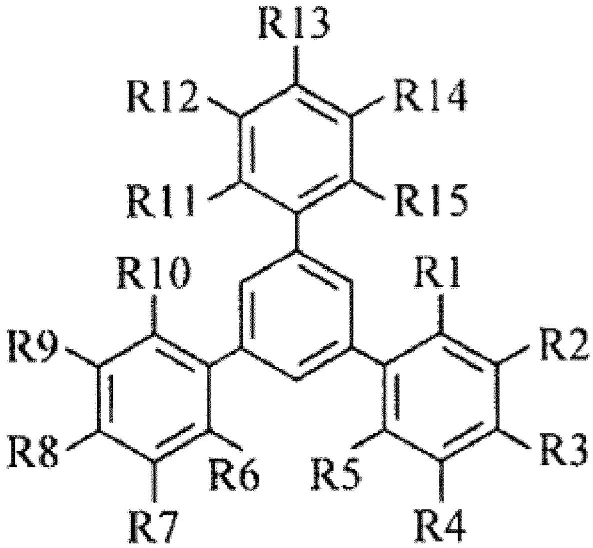

···(1)

(wobei R1 bis R15 jeweils beliebige von einer Wasserstoffgruppe (-H) und einer reaktiven Gruppe sind, und die reaktive Gruppe eine beliebige von einer Hydroxylgruppe (-OH) und einer Aminogruppe ($-NH_2$) ist, wobei mindestens einer von dem R1 bis zu dem R15 die reaktive Gruppe ist).

**2.** Harzzusammensetzung nach Anspruch 1, wobei der Gehalt an Phosphor 0,8 Massen% bis 4 Massen% beträgt.

**3.** Harzzusammensetzung nach Anspruch 1 oder 2, wobei der Gehalt an Phosphor 0,8 Massen% bis 2 Massen% beträgt.

**4.** Harzzusammensetzung nach einem der Ansprüche 1 bis 3, wobei der Phosphor als konstituierendes Element in die Epoxyverbindung eingeschlossen ist.

**5.** Harzzusammensetzung nach einem der Ansprüche 1 bis 4, wobei mindestens einer von R1 bis R5 die reaktive Gruppe ist, mindestens einer von R6 bis R10 die reaktive Gruppe ist, und mindestens einer von R11 bis R15 die reaktive Gruppe ist.

**6.** Harzzusammensetzung nach einem der Ansprüche 1 bis 5, wobei einer von R1 bis R5 die reaktive Gruppe ist, einer von R6 bis R10 die reaktive Gruppe ist, und einer von R11 bis R15 die reaktive Gruppe ist.

**7.** Harzzusammensetzung nach einem der Ansprüche 1 bis 6, wobei
R1 bis R15 jeweils beliebige von der Wasserstoffgruppe und der Hydroxylgruppe sind, oder
R1 bis R15 jeweils beliebige von der Wasserstoffgruppe und der Aminogruppe sind.

**8.** Harzzusammensetzung nach einem der Ansprüche 1 bis 7, wobei die Triphenylbenzolverbindung eine oder beide der Verbindungen einschließt, die durch die jeweiligen Ausdrücke (1-1) und (1-2) ausgedrückt werden:

[Chemische Formel 2]

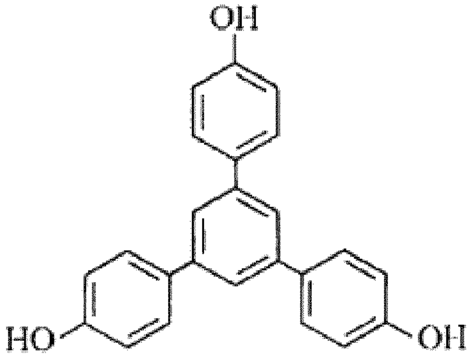

(1-1)

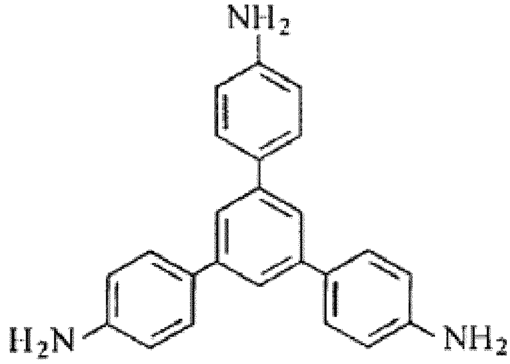

(1-2)

**9.** Harzfolie, umfassend: die Harzzusammensetzung nach einem der Ansprüche 1 bis 8.

**10.** Gehärtetes Harzprodukt, umfassend: einen gehärteten Reaktanten der Harzzusammensetzung nach einem der Ansprüche 1 bis 8.

**11.** Harzsubstrat, umfassend: einen gehärteten Reaktanten der Harzfolie nach Anspruch 9.

**12.** Harzsubstrat nach Anspruch 11, wobei der gehärtete Reaktant zwei oder mehr gehärtete Reaktanten der Harzfolien umfasst, und die zwei oder mehr gehärteten Reaktanten der Harzfolien gestapelt sind.

## Revendications

**1.** Composition de résine comprenant :

un composé époxy ;
un composé de triphénylbenzène exprimé par l'expression suivante (1) ;
une particule inorganique comprenant l'un ou les deux parmi un oxyde de magnésium (MgO) et un nitrure d'aluminium (AlN) ; et
du phosphore (P),
une teneur (% en masse) en phosphore exprimée par l'expression mathématique suivante (A) étant de 0,5% en masse à 4,3% en masse,

la teneur (% en masse) en phosphore = (masse du phosphore/masse de la teneur en substances non volatiles à l'exclusion de la particule inorganique) x 100 (A)

[Formule chimique 1]

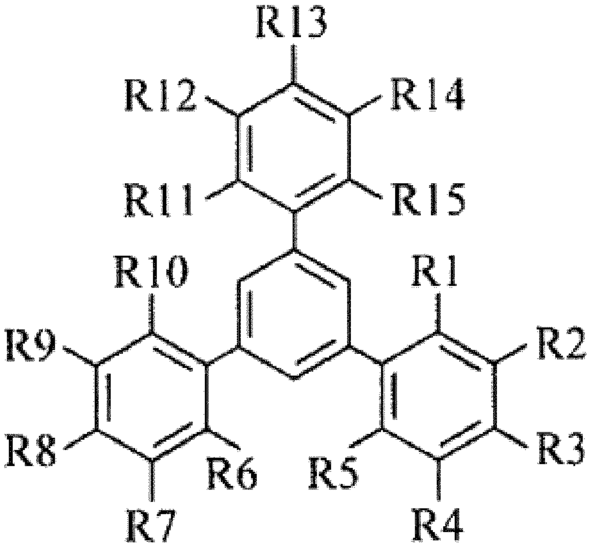

···(1)

(R1 à R15 représentent chacun l'un quelconque parmi un groupe hydrogène (-H) et un groupe réactif et le groupe réactif étant l'un quelconque parmi un groupe hydroxyle (-OH) et un groupe amino ($-NH_2$), au moins l'un parmi R1 à R15 étant le groupe réactif).

**2.** Composition de résine selon la revendication 1, la teneur en phosphore étant de 0,8% en masse à 4% en masse.

**3.** Composition de résine selon la revendication 1 ou 2, la teneur en phosphore étant de 0,8% en masse à 2% en masse.

**4.** Composition de résine selon l'une quelconque des revendications 1 à 3, le phosphore étant inclus dans le composé époxy en tant qu'élément constitutif.

**5.** Composition de résine selon l'une quelconque des revendications 1 à 4,
au moins l'un parmi R1 à R5 étant le groupe réactif,
au moins l'un parmi R6 à R10 étant le groupe réactif et
au moins l'un parmi R11 à R15 étant le groupe réactif.

**6.** Composition de résine selon l'une quelconque des revendications 1 à 5,
l'un parmi R1 à R5 étant le groupe réactif,
l'un parmi R6 à R10 étant le groupe réactif et
l'un parmi R11 à R15 étant le groupe réactif.

**7.** Composition de résine selon l'une quelconque des revendications 1 à 6,
R1 à R15 représentant chacun l'un quelconque parmi le groupe hydrogène et le groupe hydroxyle, ou
R1 à R15 représentant chacun l'un quelconque parmi le groupe hydrogène et le groupe amino.

**8.** Composition de résine selon l'une quelconque des revendications 1 à 7, le composé de triphénylbenzène comprenant l'un ou les deux composés exprimés par les expressions respectives suivantes (1-1) et (1-2).

[Formule chimique 2]

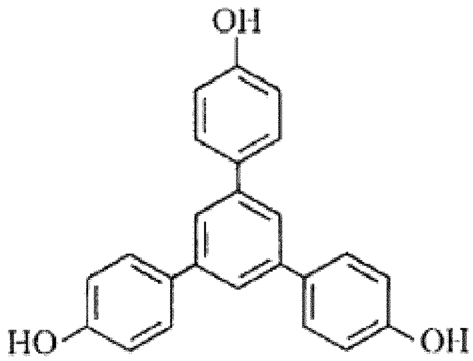

(1-1)

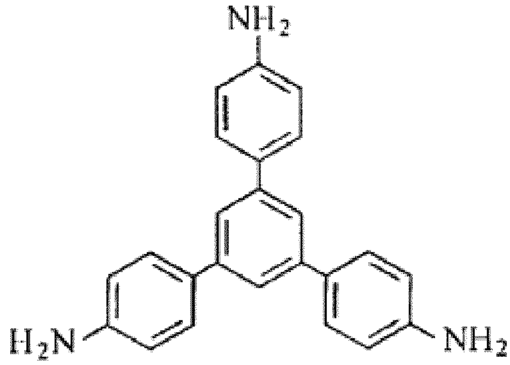

(1-2)

9. Feuille de résine comprenant la composition de résine selon l'une quelconque des revendications 1 à 8.

10. Produit durci de résine comprenant un réactif durci de la composition de résine selon l'une quelconque des revendications 1 à 8.

11. Substrat de résine comprenant un réactif durci de la feuille de résine selon la revendication 9.

12. Substrat de résine selon la revendication 11, le réactif durci comprenant deux réactifs durcis ou plus des feuilles de résine, et lesdits deux réactifs durcis ou plus des feuilles de résine étant empilés.

[ FIG. 1 ]

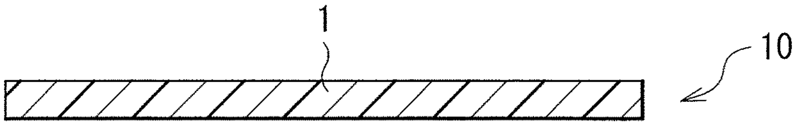


[ FIG. 2 ]

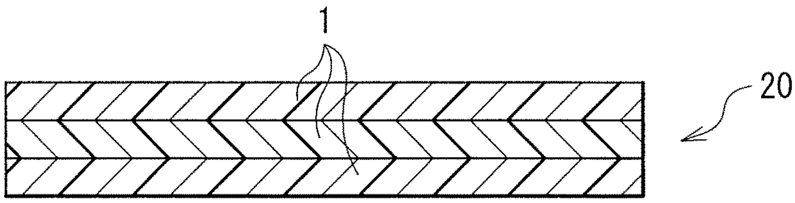


[ FIG. 3 ]

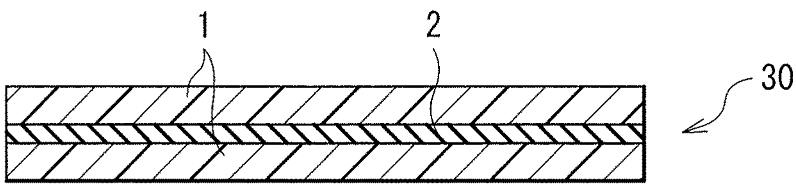


[ FIG. 4 ]

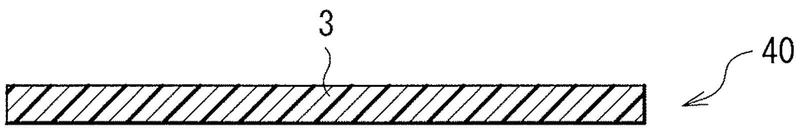


[ FIG. 5 ]

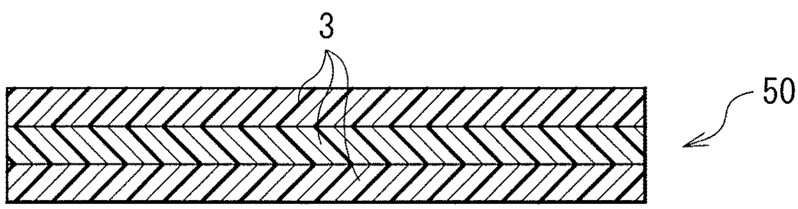

[ FIG. 6 ]

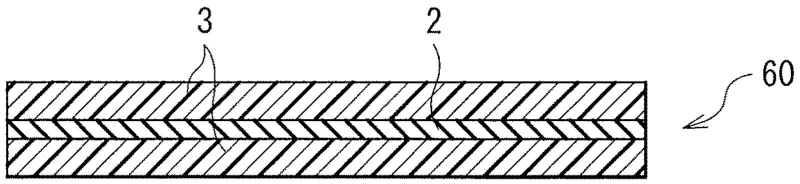


[ FIG. 7 ]

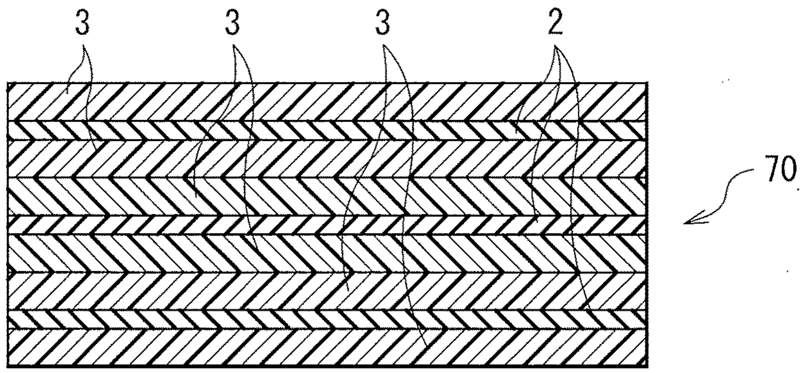


[ FIG. 8 ]

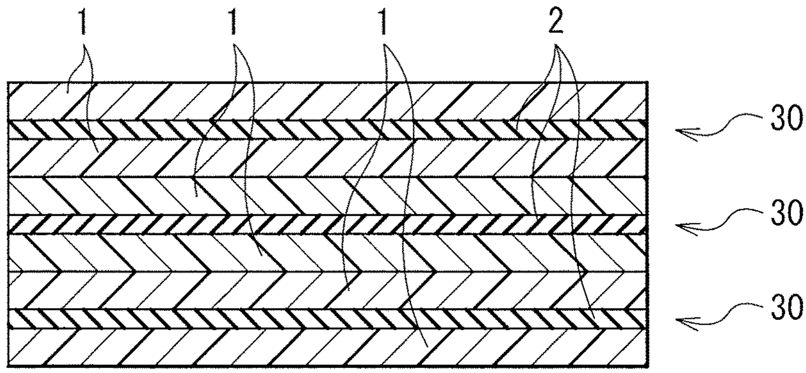

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5423783 B